# EUROPÄISCHE PATENTANMELDUNG

(11) **EP 4 024 570 A2**
(43) Veröffentlichungstag der Anmeldung: **06.07.2022**
(21) Anmeldenummer: 21213406.8
(22) Anmeldetag: 09.12.2021
(51) Int. Cl.: H01M 10/6556, H01M 10/6567

(54) **TEMPERIERUNGSVORRICHTUNG FÜR EIN BATTERIEMODUL, HERSTELLUNGSVERFAHREN UND TEMPERIERUNGSVERFAHREN**

(30) Priorität: 05.01.2021 DE 102021200040
(71) Anmelder: Robert Bosch GmbH, 70442 Stuttgart (DE)
(72) Erfinder: Schmitt, Markus, 71732 Tamm (DE); Kopp, Benjamin, 71686 Remseck Am Neckar (DE)

(57) **Zusammenfassung**

Die vorgestellte Erfindung betrifft eine Temperierungsvorrichtung (100) für ein Batteriemodul, wobei die Temperierungsvorrichtung (100) ein Gehäuse (101) zum Aufnehmen von Batteriezellen des Batteriemoduls umfasst,
wobei das Gehäuse (101) eine Bodenplatte (103) mit einer ersten Seite (105) und einer der ersten Seite gegenüberliegenden zweiten Seite (109) umfasst, wobei die erste Seite (105) dazu konfiguriert ist, über ein thermisches Verbindungselement mit den Batteriezellen des Batteriemoduls thermisch gekoppelt zu werden, wobei sich auf der zweiten Seite (109) ein Strömungsleitelement (113) erhebt, das einen Strömungskanal (115) zum Leiten von Temperierungsmedium bildet, wobei sich in dem Strömungskanal (115) eine Vielzahl von Wirbelelementen (117) erheben, wobei jeweilige Wirbelelemente (117) der Vielzahl an Wirbelelementen (117) in einem Muster angeordnet sind, das eine turbulente Strömung von in den Strömungskanal einströmendem Temperierungsmedium bedingt, und wobei das Strömungsleitelement (113) höher ist als jeweilige Wirbelelemente (117), sodass eine auf dem Strömungsleitelement (115) anzuordnende Abdeckplatte (107) beabstandet von den Wirbelelementen (117) ist.

## Beschreibung

### Stand der Technik

Bei der Herstellung von Batterien, insbesondere von Traktionsbatterien zum Versorgen eines Antriebs eines Fahrzeugs mit elektrischer Energie, werden Batteriezellen zu Batteriemodulen und Batteriemodule wiederum zu Batterien bzw. Batteriesystemen zusammengeschaltet.

Aufgrund der Vielzahl an verschiedenen Fahrzeugbauräumen besteht Bedarf für Batteriemodule in verschiedenen Größen und Formen, um einen vorhandenen Bauraum optimal auszunutzen.

Li-Ionen-Batteriezellen, bzw. Li-Polymer-Batteriezellen erwärmen sich bedingt durch chemische Wandlungsprozesse vor allem bei der schnellen Energieabgabe bzw. Energieaufnahme. Je leistungsfähiger ein Batteriesystem ist, desto größer ist seine Erwärmung und damit einhergehend eine Anforderung an eine effiziente und aktive Temperierungsvorrichtung zum Kühlen oder Heizen jeweiliger Batteriezellen des Batteriesystems.

Da eine optimale Betriebstemperatur von Li-Ionen-Batteriesystemen im Bereich zwischen +5 °C und +35 °C liegt, werden Temperierungssysteme in der Regel zum Kühlen jeweiliger Batteriesysteme eingesetzt.

Ab einer Betriebstemperatur von ca. +40 °C reduziert sich die Lebensdauer eines Batteriesystems. Um die Lebensdaueranforderung von ca. 8-10 Jahren zu erreichen, ist deshalb eine hinreichende thermische Konditionierung eines jeweiligen Batteriesystems erforderlich, bei dem die Batteriezellen des Batteriesystems unter allen Betriebszuständen in einem thermisch unkritischen Zustand unter +40 °C gehalten werden.

Weiterhin sollte ein Temperaturgradient zwischen jeweiligen Batteriezellen so gering wie möglich sein, um einen Alterungsgleichlauf der Batteriezellen zu erreichen.

Bspw. durch Dokument WO 10 2017 045 877 A1 sind Systeme bekannt, bei denen ein Temperieren von Batteriesystemen durch eine Flüssigkeitstemperierung mit einem Kühlmittel, wie bspw. einem Wasser/Glykol-Gemisch erfolgt. Dazu wird das Kühlwasser durch Kühlmittelkanäle in unterhalb jeweiliger Batteriemodule angeordneten Kühlplatten geleitet. Die Versorgung der Kühlplatten wird mit einer Kühlmittelverschlauchung mit entsprechenden weiteren Komponenten im Kühlkreislauf eines jeweiligen Fahrzeugs realisiert. Entsprechend erfolgt die Temperierung der Batteriezellen direkt über das Batteriegehäuse bzw. sind jeweilige Kühlmittelkanäle in das Batteriegehäuse integriert, um auf zusätzliche Bauteile zu verzichten und einen thermischen Pfad von dem Kühlmittel zu den Batteriezellen zu minimieren.

### Offenbarung der Erfindung

Im Rahmen der vorgestellten Erfindung werden eine Temperierungsvorrichtung, ein Herstellungsverfahren zum Herstellen der Temperierungsvorrichtung und ein Temperierungsverfahren zum Betrieb der Temperierungsvorrichtung vorgestellt. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Temperierungsvorrichtung beschrieben sind, selbstverständlich auch im Zusammenhang mit dem erfindungsgemäßen Herstellungsverfahren sowie dem erfindungsgemäßen Temperierungsverfahren und jeweils umgekehrt, sodass bezüglich der Offenbarung zu den einzelnen Erfindungsaspekten stets wechselseitig Bezug genommen wird bzw. werden kann.

Die vorgestellte Erfindung dient dazu, eine Traktionsbatterie eines Fahrzeugs zu temperieren, d.h. zu erwärmen oder zu kühlen.

Es wird somit gemäß einem ersten Aspekt der vorgestellten Erfindung eine Temperierungsvorrichtung für ein Batteriemodul vorgestellt. Die Temperierungsvorrichtung umfasst ein Gehäuse zum Aufnehmen von Batteriezellen des Batteriemoduls, wobei das Gehäuse eine Bodenplatte mit einer ersten Seite und einer der ersten Seite gegenüberliegenden zweiten Seite umfasst. Die erste Seite ist dazu konfiguriert, über ein thermisches Verbindungselement mit den Batteriezellen des Batteriemoduls thermisch gekoppelt zu werden. Auf der zweiten Seite erhebt sich ein Strömungsleitelement, das einen Strömungskanal zum Leiten von Temperierungsmedium bildet, wobei sich in dem Strömungskanal eine Vielzahl von Wirbelelementen erheben, wobei jeweilige Wirbelelemente der Vielzahl an Wirbelelementen in einem Muster angeordnet sind, das eine turbulente Strömung von in den Strömungskanal einströmendem Temperierungsmedium bedingt, und wobei das Strömungsleitelement höher ist als jeweilige Wirbelelemente, sodass eine auf dem Strömungsleitelement anzuordnende Abdeckplatte beabstandet von den Wirbelelementen ist.

Unter einem Wirbelelement ist im Kontext der vorgestellten Erfindung eine geometrische Struktur zu verstehen, die eine laminare Strömung von insbesondere Temperierungsmedium zumindest bereichsweise in eine turbulente Strömung überführt. Dazu kann ein Wirbelelement bspw. zylindrisch, konisch, pyramidal oder in jeder weiteren geometrischen Form ausgestaltet sein. Insbesondere können in Ausgestaltung der vorgestellten

Temperierungsvorrichtung verschiedene Wirbelelemente in verschiedenen geometrischen Formen zusammen ein Muster an Wirbelelementen bilden, das einen besonders hohen Anteil von turbulenten Strömungen in einem Volumenstrom an Temperierungsmedium bedingt.

Unter einem Temperierungsmedium ist im Kontext der vorgestellten Erfindung ein Volumenstrom eines Mediums, wie bspw. einem Gemisch aus Wasser und Glykol zu verstehen, das eine Menge an thermischer Energie aufnehmen bzw. abgeben kann und entsprechend eine Entwärmung bzw. eine Erwärmung einer Umgebung bedingt. Bspw. kann ein zum Betrieb eines Fahrzeugs verwendetes Kühlmittel als Temperierungsmedium verwendet werden.

Unter einem thermischen Verbindungselement ist im Kontext der vorgestellten Erfindung eine besonders gut wärmeleitende Struktur, wie bspw. eine Anzahl Füllelemente, ein Kleber bzw. eine Klebeschicht oder eine Matte. Die wärmeleitende Struktur kann bspw. mit wärmeleitenden Teilchen, insbesondere mit Metallfäden oder Metallkugeln bevorzugt wärmeleitenden elektrisch nicht leitfähigen Partikeln durchzogen sein.

Die vorgestellte Temperierungsvorrichtung basiert auf einem Gehäuse mit einem sandwichartigen Boden, der eine Bodenplatte mit einer ersten Seite, die zu einem Aufnahmeraum für ein Batteriemodul und mit einer zweiten Seite, die von dem Aufnahmeraum weg ausgerichtet ist, umfasst. Entsprechend liegen die erste Seite und die zweite Seite einander gegenüber.

Die zweite Seite der Bodenplatte des Gehäuses der vorgestellten Temperierungsvorrichtung ist dazu konfiguriert, mit Temperierungsmedium umspült zu werden. Entsprechend ist an der zweiten Seite ein Strömungskanal ausgebildet, der durch ein sich an der Bodenplatte dreidimensional erhebendes Strömungsleitelement gebildet bzw. begrenzt wird. Entsprechend wird durch das Strömungsleitelement auf die Bodenplatte geleitetes Temperierungsmedium an einem vorgegebenen Strömungspfad entlang geleitet.

Das Strömungsleitelement kann die Bodenplatte bspw. umranden, d.h. an einem äußeren Rand der Bodenplatte ausgestaltet sein und dient insbesondere zur Abstützung gegen einen beim Betrieb der Temperierungsvorrichtung anliegenden Innendruck, d.h. einem erhöhten Druck gegenüber dem Umgebungsdruck, der in dem Strömungskanal im Betrieb vorliegt.

Durch das Strömungsleitelement der vorgestellten Temperierungsvorrichtung an der Bodenplatte entlang geleitetes bzw. die Bodenplatte unterströmendes Temperierungsmedium führt, je nach Temperatur des Temperierungsmediums, zu einer Erwärmung oder zu einer Entwärmung der Bodenplatte und, dadurch bedingt, zu einer Erwärmung oder einer Entwärmung einer über das thermische Verbindungselement mit der Bodenplatte thermisch gekoppelten Batterie.

Durch die in dem Strömungskanal erfindungsgemäß vorgesehenen Wirbelelemente wird eine Durchmischung von in dem Strömungskanal strömendem Temperierungsmedium erreicht, sodass eine Grenzschicht, die einen Kontakt zwischen dem Temperierungsmedium und der Bodenplatte bildet, stetig aufgewirbelt wird. Entsprechend wird eine Kontaktfläche zwischen dem Temperierungsmedium und einer wärmeübertragenden Fläche der Bodenplatte maximiert und eine homogene Wärmeverteilung in dem Temperierungsmedium erreicht sowie ein Wärmeübergang von dem Gehäuse zu dem Temperierungsmedium, oder umgekehrt, maximiert.

Um einen Druckverlust eines Drucks, mit dem ein Temperierungsmedium durch den Strömungskanal der vorgestellten Temperierungsvorrichtung strömt, zu minimieren, ist das Strömungsleitelement höher als jeweilige Wirbelelemente bzw. sind jeweilige Wirbelelemente niedriger als das Strömungsleitelement, sodass eine auf dem Strömungsleitelement anzuordnende Abdeckplatte beabstandet von den Wirbelelementen ist. Durch die gegenüber dem Strömungsleitelement niedrigeren Wirbelelemente bildet sich ein Strömungsbereich zwischen der Abdeckplatte und den Wirbelelementen aus, in dem Temperierungsmedium ungehindert strömen kann. Aufgrund von durch die Wirbelelemente in das Temperierungsmedium eingebrachten Strömungsanteilen wird eine Durchmischung von in dem Strömungsbereich strömendem Temperierungsmedium mit zwischen den Wirbelelementen strömendem Temperierungsmedium erzwungen, sodass es insgesamt zu einer Druckminderung in dem Volumenstrom an Temperierungsmedium kommt, jedoch eine konstante Grenzschicht zu der Bodenplatte und/oder der Abdeckplatte vermieden wird.

Es kann weiterhin vorgesehen sein, dass das Strömungsleitelement ein Zwischenelement umfasst, das den Strömungskanal in zwei lediglich an einem Ende des Strömungskanals strömungsleitend verbundene Teilkanäle teilt, wobei die Bodenplatte in einem ersten Teilkanal eine Einströmöffnung und in einem zweiten Teilkanal eine Ausströmöffnung umfasst.

Durch ein Zwischenelement, das bspw. den Strömungskanal in zwei Hälften, insbesondere in zwei symmetrische Hälften teilt, kann ein komplexer Strömungspfad erzeugt und eine direkte bzw. kurzest mögliche Strömungsbewegung von einer Eintrittsöffnung zu einer Austrittsöffnung verhindert werden. Entsprechend bewirkt das Zwischenelement eine Maximierung einer Fläche des Strömungskanals und einen entsprechend maximierten Übergang von thermischer Energie zwischen dem Gehäuse und dem Temperierungsmedium.

Insbesondere kann das Zwischenelement mit einer Abdeckplatte, die auf der Bodenplatte angeordnet wird, verbunden sein, sodass ein Kurzschlussstrom bzw. eine kürzest mögliche Verbindung zwischen einem Einlass und einem Auslass für Temperierungsmedium verhindert wird und das Temperierungsmedium an dem Strömungskanal entlang geleitet wird.

Es kann weiterhin vorgesehen sein, dass das Zwischenelement eine Breite zwischen 8 mm und 12 mm hat.

Es hat sich in Versuchen überraschend herausgestellt, dass ein Zwischenelement mit einer Breite zwischen 8 mm und 12 mm, insbesondere von 11 mm, zu einem besonders effizienten Austausch von thermischer Energie zwischen dem Gehäuse und einem jeweiligen Temperierungsmedium führt und ein Aufwölben des Abdeckelementes durch den Innendruck im Betrieb sicher verhindert. Durch die stoffschlüssige Verbindung des Zwischenelementes mit dem Abdeckelement werden die durch den Innendruck erzeugten Spannungen in der umlaufenden Verbindungsstelle zwischen Strömungsleitelementen und Abdeckelement im Betrieb auf ein für die Erreichung der geforderten Lebensdauer des Bauteils ertragbaren Spannungen reduziert.

Es kann weiterhin vorgesehen sein, dass an jeweiligen Flanken des Zwischenelements und/oder an dem Strömungsleitelement Wirbelelemente ausgestaltet sind.

An jeweiligen Flanken, d.h. an jeweiligen Seitenteilen des Zwischenelements bzw. an einer Innenflanke des Strömungsleitelements ausgebildete Wirbelelemente verhindern eine kontinuierliche Grenzschicht des Temperierungsmediums an dem Zwischenelement. Durch an jeweiligen Flanken des Zwischenelements bzw. des Strömungsleitelements ausgebildete Wirbelelemente wird an dem Zwischenelement bzw. dem Strömungsleitelement entlang strömendes Temperierungsmedium in eine turbulente Strömung überführt und mit weiteren Teilen des Temperierungsmediums vermischt, sodass eine homogene Wärmeverteilung innerhalb des Temperierungsmediums erreicht wird. Zusätzlich wird dadurch verhindert, dass ein Großteil des Temperierungsmediums zwischen Strömungsleitelement und Wirbelelementen ungehindert hindurchströmt und somit nicht zum Wärmeübergang beiträgt.

Es kann weiterhin vorgesehen sein, dass jeweilige Wirbelelemente der Vielzahl Wirbelelemente in einem Muster ausgestaltet sind, das eine Vielzahl Reihen umfasst, wobei jeweils benachbarte Reihen symmetrisch versetzt zueinander ausgestaltet sind.

Durch versetzt ausgestaltete Reihen von Wirbelelementen kann eine besonders effiziente Überführung von laminaren Strömungen in turbulente Strömungen bzw. eine Durchmischung von turbulenten Strömungen untereinander und, dadurch bedingt, eine besondere homogene Temperaturverteilung innerhalb eines jeweiligen Volumenstroms an Temperierungsmedium erreicht werden.

Es kann weiterhin vorgesehen sein, dass Wirbelelemente jeweils benachbarter Reihen zwischen 8 mm und 12 mm versetzt zueinander ausgestaltet sind.

Es hat sich in Versuchen überraschend herausgestellt, dass ein Versatz jeweiliger Reihen von Wirbelelementen zwischen 8 mm und 12 mm, insbesondere von 10 mm, zu einem besonders effizienten Austausch von thermischer Energie zwischen dem Gehäuse und einem jeweiligen Temperierungsmedium führt.

Es kann weiterhin vorgesehen sein, dass jeweilige Wirbelelemente der Vielzahl Wirbelelemente rund sind und einen Durchmesser zwischen 3 mm und 6 mm und/oder eine Höhe zwischen 3 mm und 6 mm haben und/oder eine Entformschräge von mindestens 8° und/oder einen Radius von mindestens 1 mm haben.

Es hat sich in Versuchen überraschend herausgestellt, dass runde, insbesondere zylindrische Wirbelelemente mit einem Durchmesser zwischen 3 mm und 6 mm und/oder einer Höhe zwischen 3 mm und 6 mm und/oder einer Entformschräge von mindestens 8° und/oder einem Radius von mindestens 1 mm zu einem besonders effizienten Austausch von thermischer Energie zwischen dem Gehäuse und einem jeweiligen Temperierungsmedium führen.

Es kann weiterhin vorgesehen sein, dass der Strömungskanal mindestens einen Freibereich umfasst, in dem keine Wirbelelemente angeordnet sind, wobei der mindestens eine Freibereich außerhalb eines Kopplungsbereichs liegt, an dem die Bodenplatte mit den Batteriezellen des Batteriemoduls thermisch gekoppelt ist.

Durch einen Freibereich des erfindungsgemäß vorgesehenen Strömungskanals, in dem keine Wirbelelemente angeordnet sind, d.h. der wirbelelementfrei ist, kann der Druckverlust in einer Zuführleitung zum Zuführen von Temperierungsmedium in das erfindungsgemäß vorgesehene Gehäuse minimiert werden. Um einen Übergang von thermischer Energie von einer in dem Gehäuse angeordneten Batterie zu dem Temperierungsmedium auch bei Vorliegen eines Freibereichs zu maximieren, ist der Freibereich außerhalb eines Kopplungsbereichs, in dem thermische Energie zwischen der Batterie und dem Temperierungsmedium ausgetauscht wird, vorgesehen.

Ferner bewirkt ein Freibereich in der vorgestellten Temperierungsvorrichtung eine schnelle Verteilung von Temperierungsmedium durch den Strömungskanal und, dadurch bedingt, eine besonders gute Entlüftung der Temperierungsvorrichtung auch ohne Unterdruckbefüllung. Entsprechend kann unter Verwendung eines Freibereichs ein Temperierungsmedium in die Temperierungsvorrichtung durch einfaches Befüllen bspw. aus einer Flasche oder einem Tank erfolgen, ohne dass eine Pumpvorrichtung angeschlossen werden muss.

Es kann weiterhin vorgesehen sein, dass die Temperierungsvorrichtung aus einem einzelnen Teil besteht.

Durch eine einteilige bzw. monolithische Temperierungsvorrichtung, die bspw. durch ein Druckgussverfahren hergestellt ist, kann die Temperierungsvorrichtung besonders wärmeleitfähig ausgestaltet werden. Insbesondere können bei einer einteiligen Ausgestaltung thermische Barrieren, wie bspw. Schweißnähte oder Übergänge zwischen verschiedenen Materialien, vermieden werden.

In einem zweiten Aspekt betrifft die vorgestellte Erfindung ein Herstellungsverfahren zum Herstellen einer möglichen Ausgestaltung der vorgestellten Temperierungsvorrichtung. Das Herstellungsverfahren umfasst einen Formgebungsschritt in dem ein Gehäuse mit einer Bodenplatte erzeugt wird, wobei die Bodenplatte eine erste Seite und eine der ersten Seite gegenüberliegende zweite Seite umfasst, wobei die erste Seite dazu konfiguriert ist, über ein thermisches Verbindungselement mit den Batteriezellen des Batteriemoduls thermisch gekoppelt zu werden, wobei auf der zweiten Seite eine Vielzahl Wirbelelemente ausgestaltet werden, die sich von der erste Seite weg erstrecken, und bei dem an der Bodenplatte ein Strömungsleitelement erzeugt wird, das an der Bodenplatte einen Strömungskanal zum Leiten von Temperierungsmedium um die Wirbelelemente herum bildet.

Das vorgestellte Herstellungsverfahren basiert auf einem Formgebungsschritt, bei dem ein Gehäuse mit einer Bodenplatte erzeugt wird. Dazu kann ein Material, insbesondere ein Metall oder eine Metalllegierung, bspw. gegossen und/oder gepresst werden, sodass sich auf einer zweiten Seite der Bodenplatte Wirbelelemente ausbilden. Die Wirbelelemente sind entsprechend gegenüber einer Basisebene der Bodenplatte erhöht.

Weiterhin wird an der Bodenplatte ein Strömungsleitelement erzeugt, das sich gegenüber der Basisebene der Bodenplatte erhebt. Entsprechend bildet das Strömungsleitelement einen Strömungskanal zum Leiten eines Temperierungsmediums aus.

Das Strömungsleitelement kann zeitglich bzw. in einem integrierten Arbeitsschritt mit den Wirbelelementen oder unabhängig von den Wirbelelementen erzeugt werden.

Insbesondere wird die Temperierungsvorrichtung in einem Druckgussprozess hergestellt.

Es kann vorgesehen sein, dass das Herstellungsverfahren einen Schweißschritt umfasst, bei dem die Bodenplatte bereichsweise mit einer Abdeckplatte verschweißt wird.

Zum Versiegeln bzw. zum fluiddichten Abdichten der Temperierungsvorrichtung gegenüber einer Umgebung kann eine Abdeckplatte, wie bspw. ein Blech, mit der Bodenplatte verschweißt werden. Dazu kann bspw. ein Rührreibschweißverfahren verwendet werden, bei dem das Strömungsleitelement formschlüssig mit der Abdeckplatte verbunden wird, wobei bspw. das Strömungsleitelement und die Abdeckplatte unter Druck ineinander verrührt werden.

Insbesondere kann ein Zwischenelement der Bodenplatte formschlüssig mit der Abdeckplatte verschweißt werden, um einen Kurzschlussstrom von Temperierungsmedium zwischen einem Einlass und einem Auslass zu verhindern und das Temperierungsmedium an dem Strömungskanal entlang zu leiten.

Es kann weiterhin vorgesehen sein, dass in dem Formgebungsschritt ein Strömungsleitelement erzeugt wird, das ein Zwischenelement umfasst, wobei das Zwischenelement den Strömungskanal in zwei lediglich an einem Ende des Strömungskanals strömungsleitend verbundene Teilkanäle teilt, und dass in dem Schweißschritt ein Schweißwerkzeug in einem kontinuierlichen Verlauf von einem Eintrittspunkt an einem Ende des Zwischenelements über ein Ende des Zwischenelements und an dem Strömungsleitelement entlang zu einem Austrittspunkt geführt wird.

Mittels einer vorgegebenen Trajektorie entlang derer ein Schweißwerkzeug bewegt wird und die von einem Eintrittspunkt an einem Ende eines Zwischenelements der vorgestellten Temperierungsvorrichtung an dem Strömungsleitelement entlang zu einem Austrittspunkt führt, kann der Strömungskanal von einer stoffschlüssigen Verbindung zwischen Strömungsleitelement und Abdeckplatte umgeben werden, sodass die Abdeckplatte, das Strömungsleitelement und das Zwischenelement zusammen den Strömungskanal umgeben und in dem Strömungskanal strömendes Temperierungsmedium von einem Einlass zu einem Auslass leiten.

Es kann insbesondere vorgesehen sein, dass das Strömungsleitelement des Strömungskanals vollständig umgibt bzw. umrandet, sodass Einlass und Auslass innerhalb des Strömungskanals liegen und ebenfalls von dem Strömungsleitelement umgeben und bspw. durch ein Zwischenelement getrennt sind.

Durch eine flächige Verbindung, wie sie bei einem Rührreibschweißprozess typischerweise entsteht, kann eine gegenüber einem Innendruck in der vorgestellten Temperierungsvorrichtung besonders robuste und besonders fluiddichte Verbindung von Bodenplatte und Abdeckplatte bereitgestellt werden. In einem dritten Aspekt betrifft die vorgestellte Erfindung ein Temperierungsverfahren zum Temperieren eines Batteriemoduls, bei dem das Batteriemodul in einer möglichen Ausgestaltung der vorgestellten Temperierungsvorrichtung angeordnet und die Temperierungsvorrichtung mit Temperierungsmedium durchströmt wird.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen:
- Figur 1: eine mögliche Ausgestaltung der erfindungsgemäßen Temperierungsvorrichtung in einer Seitenansicht,
- Figur 2: die Temperierungsvorrichtung gemäß Figur 1 in einer Draufsicht,
- Figur 3: eine Detailansicht von Wirbelelementen der Temperierungsvorrichtung gemäß Figur 1 in einer Draufsicht,
- Figur 4: eine Detailansicht der Wirbelelemente gemäß Figur 3 in einer Seitenansicht,
- Figur 5: eine schematische Darstellung eines Ablaufs einer möglichen Ausgestaltung des erfindungsgemäßen Herstellungsverfahrens.
- Figur 6: eine schematische Darstellung eines Ablaufs einer möglichen Ausgestaltung des erfindungsgemäßen Temperierungsverfahrens.

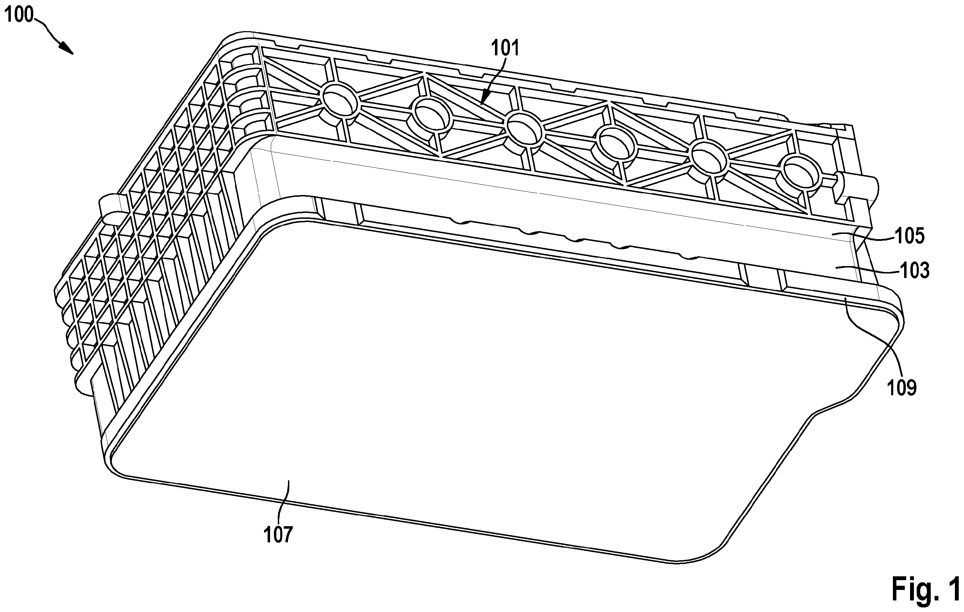

In Figur 1 ist eine Temperierungsvorrichtung 100 dargestellt. Die Temperierungsvorrichtung 100 umfasst ein Gehäuse 101 mit einer Bodenplatte 103.

Auf einer ersten Seite 105 der Bodenplatte 103 ist eine Aufnahme für ein Batteriemodul angeordnet.

Auf der ersten Seite 105 ist in einem Innenraum der Aufnahme ein Verbindungselement in Form eines thermisch leitfähigen elektrisch nicht leitfähigen Klebers angeordnet. Das Verbindungselement erzeugt eine thermische Kopplung eines Batteriemoduls mit der Bodenplatte 103.

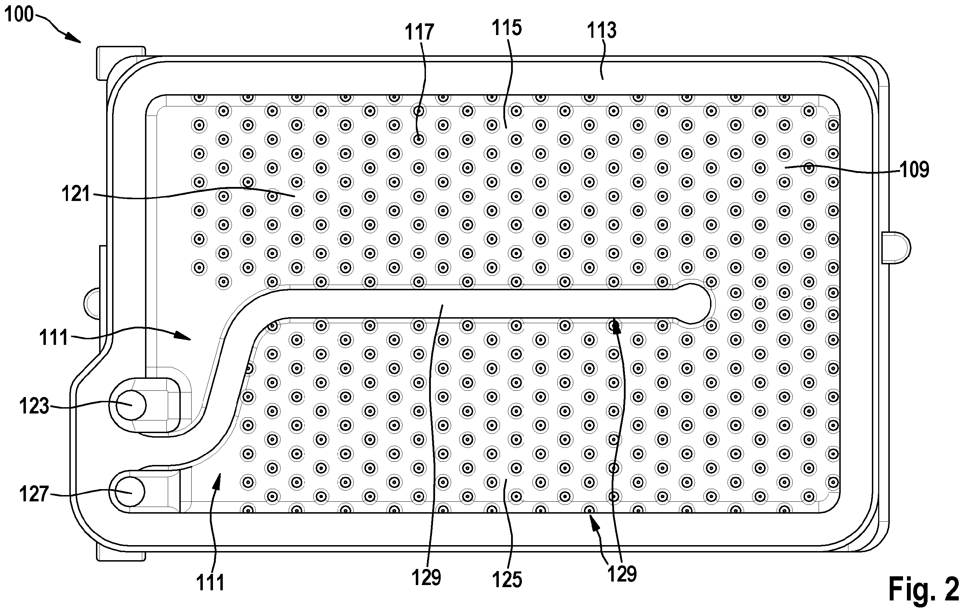

Auf einer zweiten Seite 109 der Bodenplatte 103 ist eine Abdeckplatte 107 angeordnet. Die Abdeckplatte 107 ist auf einem Strömungsleitelement 113 angeordnet, wie es bspw. in Fig. 2 dargestellt ist.

Das Strömungsleitelement 113 umgibt einen Strömungskanal 115 mit Wirbelelementen 117.

In den Strömungskanal 115 geleitetes Temperierungsmedium, wie bspw. ein Gemisch aus Wasser und Glykol, unterspült die Bodenplatte 103. Entsprechend nimmt das Temperierungsmedium, je nach Temperaturunterschied zwischen dem Temperierungsmedium und der Bodenplatte 103, thermische Energie von der Bodenplatte 103 und, dadurch bedingt, von dem Batteriemodul auf bzw. gibt thermische Energie an die Bodenplatte 103 und, dadurch bedingt, an das Batteriemodul ab.

Die Wirbelelemente 117 bewirken eine Überführung des Temperierungsmediums von einer laminaren Strömung in eine zumindest bereichsweise turbulente Strömung, sodass eine homogene Verteilung von thermischer Energie in dem Temperierungsmedium erreicht und ein bestmöglicher Übergang von thermischer Energie zwischen dem Temperierungsmedium und der Bodenplatte 103 erreicht wird. Zusätzlich vergrößern die Wirbelelemente 117 die thermische Austauschfläche zwischen Temperierungsmedium und Bodenplatte 103.

Weiterhin ist in Figur 2 ein Zwischenelement 119 zu erkennen, das einen ersten Teilströmungskanal 121 mit einem Einlass 123 von einem zweiten Teilströmungskanal 125 mit einem Auslass 127 trennt, und Temperierungsmedium entlang des Strömungskanals 115 von dem Einlass 123 zu dem Auslass 127 leitet.

Insbesondere ist in Figur 2 zu erkennen, dass an jeweiligen Flanken des Zwischenelements 119 und an einer inneren Flanke des Strömungsleitelements 113 Wirbelelemente 117 ausgestaltet sind, wie durch Pfeile 129 markiert, um einen laminaren Volumenstrom von Temperierungsmedium bzw. eine konstante Grenzschicht an dem Zwischenelement 119 bzw. dem Strömungsleitelement 113 entlang zu verhindern und das Temperierungsmedium entsprechend in eine turbulente Strömung zu überführen.

Um einen Druckverlust in dem Strömungskanal 115 zu minimieren, sind in dem Teilströmungskanal 121 und dem Teilströmungskanal 125 Freibereiche 111 vorgesehen, in denen keine Wirbelelemente 117 angeordnet sind, sodass in den Einlass 123 einströmendes bzw. in den Auslass 127 ausströmendes Temperierungsmedium ungehindert bzw. frei und entsprechend schnell, bspw. in einer laminaren Strömung, strömen kann.

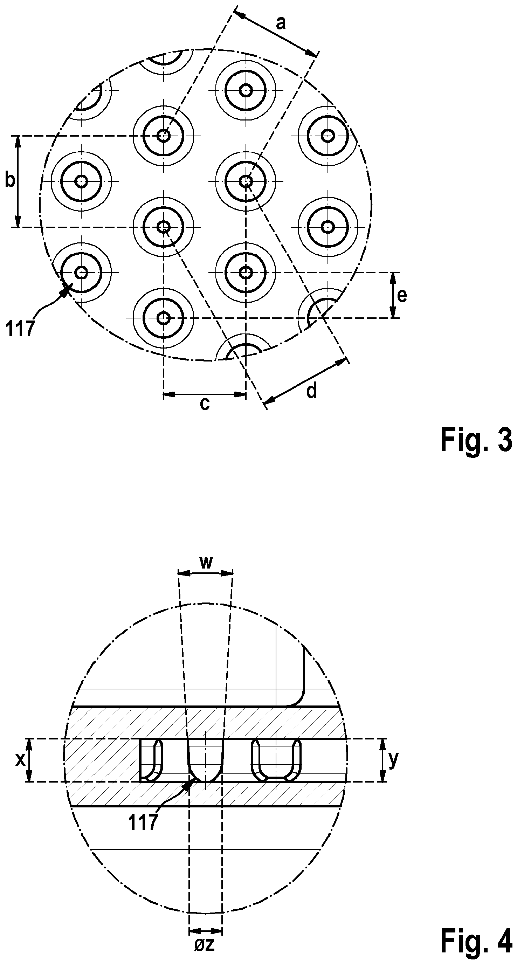

In Figur 3 sind Wirbelelemente 117 mit entsprechender Bemaßung einer möglichen Ausgestaltung der vorgestellten Temperierungsvorrichtung 100 dargestellt.

In Figur 3 ist erkennbar, dass eine Vielzahl Wirbelelemente 117 in zueinander versetzt angeordneten Reihen angeordnet ist, wobei zwei benachbarte Wirbelelemente 117 derselben Reihe in einem Abstand "a" bzw. "d" von insbesondere 10 mm voneinander beabstandet und zwei schräg versetzte Wirbelelemente 117 verschiedener Reihen in einem Abstand "b" von insbesondere 10 mm bzw. zwei parallel zueinander versetzte Wirbelelemente 117 in einem Abstand "c" von insbesondere 8,66 mm beabstandet sind.

Durch die voranstehend beschriebenen Abstände ergibt sich ein Abstand "e" zwischen zwei Zentren jeweilig benachbarter Wirbelelemente 117 von insbesondere 5 mm.

Aufgrund der zueinander versetzten Anordnung der Wirbelelemente 117 wird ein anströmender Volumenstrom von Temperierungsmedium durch eine jeweilig nächste Reihe von Wirbelelementen 117 umgelenkt und eine Ausprägung einer laminaren Grenzschicht verhindert.

In Figur 4 sind die Wirbelelemente 117 in einer Seitenansicht mit entsprechender Bemaßung einer möglichen Ausgestaltung dargestellt. Die Wirbelelemente 117 haben eine Höhe "x" von insbesondere 4,5 mm hoch und sind damit vorzugsweise 0,5 mm kleiner als eine Gesamthöhe "y" von insbesondere 5 mm des Strömungsleitelements 113. Entsprechend ist zwischen einer den Strömungskanal 115 umgebenden Abdeckplatte 107 und den Wirbelelementen 117 ein Spalt von insbesondere 0,5 mm Höhe, der bspw. zum Verdrängen von Luft aus dem Temperierungselement 100 genutzt werden kann, sodass eine Befüllung des Temperierungselements 100 auch ohne Unterdruck, lediglich unter Verwendung eines Befüllungsgefäßes, erreicht werden kann.

Die Wirbelelemente 117 sind als zylindrische Strukturen mit einem Durchmesser "z" von insbesondere 4mm ausgestaltet und haben eine Entformschräge "w" von insbesondere 8°.

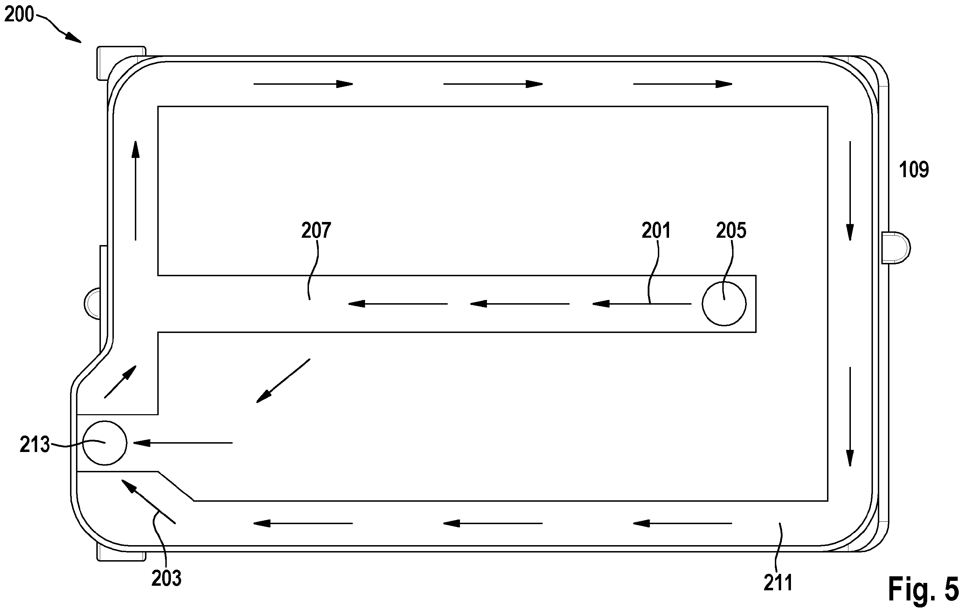

In Figur 5 ist ein Ablauf eines Herstellungsverfahrens 200 dargestellt. Ein in einem hier nicht dargestellten Formgebungsschritt bereitgestelltes Gehäuse wird in einem Schweißschritt mit einer Abdeckplatte verbunden. Dazu wird ein Schweißwerkzeug entlang einer durch die Pfeile 201 bis 203 angedeuteten Trajektorie von einem Eintrittspunkt 205 an einem Ende eines Zwischenelements 207 über ein Ende 209 des Zwischenelements 207 und an einem Strömungsleitelement 211 entlang zu einem Austrittspunkt 213 geführt.

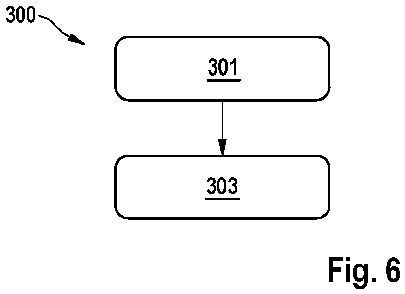

In Figur 6 ist ein Temperierungsverfahren 300 dargestellt. Das Temperierungsverfahren 300 umfasst einen Einleitungsschritt 301 zum Einleiten von Temperierungsmedium in eine Temperierungsvorrichtung, wie bspw. die Temperierungsvorrichtung 100 gemäß Figur 1, und einen Zirkulationsschritt 303, bei dem das Temperierungsmedium in einem Kreislauf zu einem Wärmetauscher und wieder zurück zu der Temperierungsvorrichtung 100 gepumpt wird.

## Patentansprüche

1. Temperierungsvorrichtung (100) für ein Batteriemodul,
wobei die Temperierungsvorrichtung (100) ein Gehäuse (101) zum Aufnehmen von Batteriezellen des Batteriemoduls umfasst,
wobei das Gehäuse (101) eine Bodenplatte (103) mit einer ersten Seite (105) und einer der ersten Seite gegenüberliegenden zweiten Seite (109) umfasst,
wobei die erste Seite (105) dazu konfiguriert ist, über ein thermisches Verbindungselement mit den Batteriezellen des Batteriemoduls thermisch gekoppelt zu werden,
wobei sich auf der zweiten Seite (109) ein Strömungsleitelement (113, 211) erhebt, das einen Strömungskanal (115) zum Leiten von Temperierungsmedium bildet,
wobei sich in dem Strömungskanal (115) eine Vielzahl von Wirbelelementen (117) erheben,
wobei jeweilige Wirbelelemente (117) der Vielzahl an Wirbelelementen (117) in einem Muster angeordnet sind, das eine turbulente Strömung von in den Strömungskanal einströmendem Temperierungsmedium bedingt, und
wobei das Strömungsleitelement (113, 211) höher ist als jeweilige Wirbelelemente (117), sodass eine auf dem Strömungsleitelement (115) anzuordnende Abdeckplatte (107) beabstandet von den Wirbelelementen (117) ist.

2. Temperierungsvorrichtung (100) nach Anspruch 1,
**dadurch gekennzeichnet,**
**dass** das Strömungsleitelement (113, 211) ein Zwischenelement (119) umfasst, dass den Strömungskanal (115) in zwei lediglich an einem Ende des Strömungskanals (115) strömungsleitend verbundene Teilkanäle teilt, wobei die Bodenplatte (103) in einem ersten Teilkanal (121) einen Einlass (123) und in einem zweiten Teilkanal (125) einen Auslass (127) umfasst.

3. Temperierungsvorrichtung (100) nach Anspruch 2,
**dadurch gekennzeichnet,**
**dass** das Zwischenelement (119) eine Breite zwischen 8mm und 12mm hat.

4. Temperierungsvorrichtung (100) nach Anspruch 2 oder 3,
**dadurch gekennzeichnet,**
**dass** an jeweiligen Flanken des Zwischenelements (119) und/oder an dem Strömungsleitelement (113) Wirbelelemente (117) ausgestaltet sind.

5. Temperierungsvorrichtung (100) nach einem der voranstehenden Ansprüche,
**dadurch gekennzeichnet,**
**dass** jeweilige Wirbelelemente (117) der Vielzahl Wirbelelemente (117) in einem Muster ausgestaltet sind, das eine Vielzahl Reihen umfasst, wobei jeweils benachbarte Reihen symmetrisch versetzt zueinander ausgestaltet sind.

6. Temperierungsvorrichtung (100) nach Anspruch 5,
**dadurch gekennzeichnet,**
**dass** Wirbelelemente (117) jeweils benachbarter Reihen zwischen 8mm und 12mm versetzt zueinander ausgestaltet sind.

7. Temperierungsvorrichtung (100) nach einem der voranstehenden Ansprüche,
**dadurch gekennzeichnet,**
**dass** jeweilige Wirbelelemente (117) der Vielzahl Wirbelelemente (117) rund sind und einen Durchmesser zwischen 3 mm und 6 mm und/oder eine Höhe zwischen 3 mm und 6 mm haben und/oder eine Entformschräge von mindestens 8° und/oder einen Radius von mindestens 1 mm haben.

8. Temperierungsvorrichtung (100) nach einem der voranstehenden Ansprüche,
**dadurch gekennzeichnet,**
**dass** der Strömungskanal (115) mindestens einen Freibereich umfasst, in dem keine Wirbelelemente (117) angeordnet sind, wobei der mindestens eine Freibereich außerhalb eines Kopplungsbereichs liegt, an dem die Bodenplatte (103) mit den Batteriezellen des Batteriemoduls thermisch gekoppelt ist.

9. Temperierungsvorrichtung (100) nach einem der voranstehenden Ansprüche,
**dadurch gekennzeichnet,**
**dass** die Temperierungsvorrichtung (100) aus einem einzelnen Teil besteht.

10. Herstellungsverfahren (200) zum Herstellen einer Temperierungsvorrichtung (100) nach einem der Ansprüche 1 bis 9, wobei das Herstellungsverfahren (200) umfasst:
- einen Formgebungsschritt in dem ein Gehäuse (101) mit einer Bodenplatte (103) erzeugt wird, wobei die Bodenplatte (103) eine erste Seite (105) und eine der ersten Seite gegenüberliegende zweite Seite (109) umfasst, wobei die erste Seite (105) dazu konfiguriert ist, über ein thermisches Verbindungselement mit den Batteriezellen des Batteriemoduls thermisch gekoppelt zu werden, wobei auf der zweiten Seite (109) eine Vielzahl Wirbelelemente (117) ausgestaltet werden, die sich von der erste Seite (105) weg erstrecken, und
wobei an der Bodenplatte (103) ein Strömungsleitelement (113, 211) erzeugt wird, das an der Bodenplatte (103) einen Strömungskanal (115) zum Leiten von Temperierungsmedium um die Wirbelelemente (117) herum bildet.

11. Herstellungsverfahren (200) nach Anspruch 10,
**dadurch gekennzeichnet,**
**dass** das Herstellungsverfahren (200) einen Schweißschritt umfasst, bei dem die Bodenplatte (103) bereichsweise mit einer Abdeckplatte (107) fluiddicht verschweißt wird.

12. Herstellungsverfahren (200) nach Anspruch 11,
**dadurch gekennzeichnet,**
**dass** in dem Formgebungsschritt ein Strömungsleitelement (113, 211) erzeugt wird, das ein Zwischenelement (119) umfasst,
wobei das Zwischenelement (119) den Strömungskanal (115) in zwei lediglich an einem Ende des Strömungskanals (115) strömungsleitend verbundene Teilkanäle (121, 125) teilt, und
**dass** in dem Schweißschritt ein Schweißwerkzeug in einem kontinuierlichen Verlauf von einem Eintrittspunkt (205) an einem Ende (209) des Zwischenelements über ein Ende des Zwischenelements und an dem Strömungsleitelement entlang zu einem Austrittspunkt (213) geführt wird.

13. Temperierungsverfahren (300) zum Temperieren eines Batteriemoduls, bei dem das Batteriemodul in einer Temperierungsvorrichtung (100) nach einem der Ansprüche 1 bis 9 angeordnet und die Temperierungsvorrichtung (100) mit Temperierungsmedium durchströmt wird.
